# FASCICULE DE BREVET EUROPEEN

(11) **EP 0 815 735 B1**
(45) Date de publication et mention de la délivrance du brevet: **10.03.2004**
(21) Numéro de dépôt: 97201868.3
(22) Date de dépôt: 19.06.1997
(51) Int. Cl.: A23C 11/04, A23C 9/13, A23C 19/055

(54) **Produit laitier diététiquement équilibré**
Diätisch ausgeglichenes Milchprodukt
Dietary balanced milk product

(30) Priorité: 27.06.1996 EP 96201794
(43) Date de publication de la demande: 07.01.1998
(73) Titulaire: SOCIETE DES PRODUITS NESTLE S.A., 1800 Vevey (CH)
(72) Inventeur: Malnoe, Armand, 1041 Dommartin (CH); Carrie, Anne-Lise, 1053 Pully (CH); Fern, Edward, 1807 Blonay (CH); Fleith, Mathilde, CH-1814 La Tour-De-Peilz (CH); Vikas, Martin, 3510 Konolfingen (CH)
(74) Mandataire: Archambault, Jean

(56) Documents cités:
- EP-A- 0 368 492
- EP-A- 0 404 058
- EP-A- 0 430 870
- EP-A- 0 639 333
- FR-A- 1 108 395
- FR-A- 2 103 275
- FR-A- 2 573 959
- FR-A- 2 663 199
- GB-A- 2 154 121
- PATENT ABSTRACTS OF JAPAN vol. 7, no. 34, 10 février 1983 & JP 57 186445 A (ZENKOKU RAKUNOUGIYOU KIYOUDOU KUMIAI RENGOUKAI)

## Description

L'invention a trait à un produit laitier diététiquement équilibré contenant un mélange de lipides d'origine lactique et d'origine végétale.

Les lipides, mis à part leur fonction en tant que source d'énergie, jouent plusieurs rôles en nutrition en tant que source d'acides gras essentiels:
- comme composants indispensables à la structure cellulaire et aux fonctions membranaires,
- comme précurseurs des métabolites eicosanoïdes qui interviennent dans de nombreux systèmes physiologiques comme le système cardio-vasculaire,
- comme régulateurs des lipides sanguins.

La réponse physiologique à la consommation des lipides alimentaires dépend de la composition en acides gras de ces lipides. Les acides gras sont classés en différentes familles, n-9, n-6 et n-3 , en fonction de leur structure, c'est à dire selon la présence et la situation des doubles liaisons dans la chaîne carbonée. Chaque famille a une activité propre spécifique, mais il existe des interactions entre les différentes familles pendant le métabolisme. Dans le cas du contrôle des lipides sanguins, il convient de tenir compte de plusieurs critères:
- L'apport alimentaire en acides gras saturés doit être limité en raison de leur influence sur l'augmentation du cholestérol et des lipides totaux et sur l'augmentation du cholestérol des lipoprotéines de faible densité (LDL) considérés comme un des facteurs de risque pour les maladies cardiovasculaires.
- Les acides gras monoinsaturés et polyinsaturés exercent un effet favorable sur les lipides sanguins en diminuant le cholestérol des LDL.

Pour les acides gras polyinsaturés, il y a cependant lieu de tenir compte des critères suivants:
- Les acides gras polyinsaturés ne doivent pas être consommés en quantité trop élevée pour ne pas induire également une diminution du cholestérol des lipoprotéines de haute densité (HDL), bénéfiques et augmenter les risques liés à la peroxydation de ces acides gras au niveau cellulaire.
- Parmi les acides gras polyinsaturés, il faut distinguer les effets spécifiques des acides gras de la famille n-3, par exemple l'acide alpha-linolénique (ALA) ou ses dérivés, les acides eicosapentaènoïque (EPA) et docosahexaènoïque (DHA) qui exercent un effet favorable sur les triglycérides sanguins et diminuent les risques d'aggrégation plaquettaire et donc de thrombose.
- En liaison avec l'apport alimentaire d'acides gras polyinsaturés, il y a lieu de tenir compte des compétitions entre les acides gras de la famille n-6 avec ceux de la famille n-3 lors du métabolisme par les désaturases qui déterminent la formation des acides gras en C ₂₀ précurseurs des eicosanoïdes biologiquement actifs.
- Parmi les acides gras polyinsaturés, les activités physiologiques peuvent différer selon la longueur de la chaîne carbonée ou le degré d'insaturation. On peut citer par exemple l'acide gamma-linolénique (GLA) de degré d'insaturation 3, qui a une activité plus prononcée que les autres membres de la famille n-6 sur le contrôle des lipides sanguins. Il en est de même par exemple pour l'EPA et le DHA dans la série n-3.
- L'apport alimentaire d'acides gras polyinsaturés doit être accompagné d'un apport suffisant en éléments antioxydants comme, par exemple, les tocophérols pour prévenir les modifications oxydatives sur les LDL qui contribuent au développement de l'athérosclérose.

EP-A-0404058 concerne la mise à disposition d'un mélange lipidique pour l'alimentation des nourrissons et des prématurés qui soit nutritionellement proche de celui du lat humaine. Le profil des acides gras est caractérisé par la présence d'acides gras polyinsaturés (triinsaturés et plus) à longue chaîne.

EP-A-0639333 se rapporte à une composition lipidique en tant que produit intermédiaire destiné à être ajouté à un produit alimentaire, laquelle composition est riche en acides gras essentiels et contient en particulier des acides gras tri-insaturés, sous forme d'un mélange d'huile. Dans un exemple d'utilisation dans un produit alimentaire final, on fabrique une poudre de lait entier dans laquelle la matière grasse est constituée pour 50% de graisse lactique et pour 50% d'un mélange d'huiles végétales, d'huile de pépins de cassis et d'huile de poisson.

Selon FR-A-2667483, on connait un substitut de crème laitière destiné aux patients à risque cardiovasculaire, dans lequel la matière grasse lactique est remplacée par un mélange d'huile de maïs et d'huile de coprah. contenu trop élevé en acides gras polyinsaturés dans le régime n'est pas souhaitable en raison d'une part de l'action négative sur le cholestérol des lipoprotéines haute densité (HDL),

Dans GB-A-2273234, on décrit un lait liquide ou en poudre, destiné à prévenir les risques cardiovasculaires, dans lequel la matière grasse lactique est remplacée par un graisse végétale contenant essentiellement des acides gras monoinsaturés.

Le but de l'invention est de fournir un produit laitier contenant un mélange lipidique basé sur une combinaison de graisse lactique et d'huiles végétales élaborée pour obtenir un équilibre optimum des substances actives afin d'éviter des charges métaboliques déséquilibrées et en particulier des risques cardiovasculaires et dont les qualités organoleptiques soient proches de celles du lait.

Le produit laitier selon l'invention est caractérisé par le fait qu'il contient des lipides dans lesquels les acides gras des triglycérides comprennent, en poids,
20 à 40 % d'acides gras saturés d'origine à prédominance lactique,
35 % à 60 % d'acides gras monoinsaturés et
15 à 30 % d'acides gras polyinsaturés des familles n-3 et n-6 et
que le rapport pondéral des acides gras de la famille n-6 sur ceux de la famille n-3 est 5:1 à 10:1 que sa partie lipidique contient en poids,
30 à 40 % de graisse lactique,
30 à 40 % d'une huile choisie parmi l'huile de colza, l'huile de canola, l'huile d'olive, les huiles hybrides de tournesol et de carthame à haute teneur en acide oléique, les oléines d'huiles végétales,
10 à 30 % d'une huilé choisie parmi l'huile de tournesol, de maïs, de soja, de pépins de raisins, de carthame
0 à 10 % d'une huile choisie parmi l'huile de son de riz, l'huile de lin, l'huile de germes de blé ou l'huile de sésame.

La composition des lipides du produit laitier selon l'invention tient compte, non seulement des activités des acides gras essentiels, mais aussi de l'interaction de chaque acide gras essentiel de la famille n-6, par exemple l'acide linoléique (LA), avec son homologue de la famille n-3, par exemple l'ALA, et de la plus forte bioactivité des dérivés de degré d'insaturation > 2.

Aussi, la partie lipidique contient une huile riche en acide oléique qui présente des effets favorables sur les lipides sanguins et confere au mélange lipidique une bonne stabilité à l'oxydation et à la photo-oxydation, ce qui évite la formation de radicaux oxygénés actifs.

Les huiles de choix répondant à cette exigeance sont de préférence, l'huile de colza, l'huile de canola (huile de colza pauvre en acide érucique), l'huile d'olive, les hybrides de tournesol et de carthame à haute teneur en acide oléique, par exemple > à 60% en poids. On peut aussi citer les oléines d'huiles végétales, par exemple de palme, obtenues par fractionnement à sec, par solvant ou par tensioactifs d'huiles et de graisses végétales.

La partie lipidique contient également des huiles apportant les acides gras essentiels des familles n-6 et n-3 dans un rapport tenant compte de la plus grande réactivité de ceux de la famille n-3.

Les huiles riches en acide gras de la famille n-6 sont choisies parmi celles riches en LA, de préférence contenant plus de 50 % en poids de cet acide par rapport aux acides gras totaux, par exemple l'huile de tournesol, l'huile de pépins de raisin, l'huile de maïs, l'huile de germes de blé, l'huile de carthame, l'huile de soja.

Comme huiles fournissant les acides gras de la famille n-3, on peut citer celles qui contiennent l'ALA, par exemple l'huile de colza, l'huile de canola, l'huile de soja, l'huile de lin, l'huile de pépin de cassis et celles fournissant l'EPA et le DHA, par exemple les huiles d'organismes marins.

Le produit laitier selon l'invention peut encore contenir d'autres huiles en quantité mineure, dans le but, par exemple d'améliorer ses propriétés de conservation et d'apporter des antioxydants biologiquement actifs pour prévenir la peroxydation au niveau cellulaire, par exemple une huile de germes de céréales riche en vitamine E. Le mélange lipidique peut en outre contenir des huiles naturellement riches en antioxydants non vitaminiques comme l'huile de sésame ou l'huile de son de riz ou encore en éléments comme, par exemple les tocotriénols ou le gamma-oryzanol qui exercent des effets favorables sur le contrôle du cholestérol sanguin.

Sur la base de leur compositions respectives en acides gras, les mélanges des lipides ci-après sont préférés:

| **Lipide** | **% en poids** | **% en poids** |
|---|---|---|
| Graisse lactique | 30-40, | de préférence 40 |
| Huile de canola, de tournesol hybride, de carthame hybride riches en acide oléique, d'olive, ou fractions oléines | 30-40, | de préférence 30-35 |
| | | |
| et leurs mélanges | | |
| | | |
| Huile de tournesol, de maïs, de soja, de pépin de raisins ou de carthame | 10-30 | de préférence 20-25 |
| | | |
| Huile de lin, de pépin de cassis, | 0-10 | |
| | | |
| de son de riz, | | |
| | | |
| de sésame, | | |
| | | |
| de germe de blé | | |

Les huiles végétales mise en oeuvre sont en général raffinées de manière à être stables, tout en gardant dans la mesure du possible au moins une partie de leurs insaponifiables à titre d'antioxydant.

Il peut en outre contenir des antioxydants liposolubles ou rendus liposolubles, par exemple un mélange d'acide ascorbique ou d'un de ses esters, d'acide citrique, de lécithine, de tocophérols et le cas échéant de béta-carotène.

Le produit laitier selon l'invention peut se présenter sous forme de lait ou de substitut de lait liquide et contenir 1 à 4 % de matière grasse et de préférence environ 2 % de matière grasse, ce qui correspond à un lait semi-écrémé.

Il peut correspondre à un lait condensé non sucré ou évaporé.

Il peut, de préférence être enrichi en calcium.

Il peut être enrichi en vitamines, par exemple E, A, D, C, B₆, B₁₂, folate et en oligo-éléments, par exemple en fer, magnésium, zinc.

Il peut avoir été appauvri en lactose tout en maintenant un niveau de calcium élevé, par exemple par microfiltration, ce qui peut être avantageux dans certains cas pour diminuer la teneur en certains minéraux ayant un effet sur l'hypertension, comme par exemple le sodium.

Enfin, il peut être aromatisé, par exemple par addition d'arôme de fruit, de canelle, de vanille, de chocolat ou de café.

Dans cette présentation liquide, il peut avoir été de préférence stérilisé, ultra-pasteurisé ou pasteurisé et être conditionné aseptiquement ou de manière hautement hygiénique en emballage stérilisé.

Le produit laitier peut également être sous forme de poudre, par exemple séché par pulvérisation.

Il peut également être un lait fermenté ou un produit fromager, notamment du genre Mozzarella.

Un produit laitier selon l'invention peut être utilisé comme matière première dans la fabrication de crèmes, crème glacée, desserts, sauces et en général dans la fabrication de tout produit à base de lait.

L'invention concerne également un procédé de préparation d'un produit laitier liquide précédent, caractérisé par le fait que l'on standardise une matière première à base de lait en matière grasse lactique, que l'on y incorpore un lipide d'origine végétale, le cas échéant en présence d'émulsifiant de manière à obtenir une émulsion, que l'on préchauffe, traite thermiquement par UHT, homogénéise, refroidit et conditionne aseptiquement l'émulsion.

L'invention concerne également un procédé de préparation d'un produit laitier précédent sous forme de poudre, caractérisé par le fait que l'on standardise en matière grasse lactique une matière première à base de lait, que l'on y incorpore un lipide d'origine végétale en présence d'émulsifiant de manière à obtenir une émulsion, que l'on préchauffe, puis concentre l'émulsion par évaporation et qu'on homogénéise, puis sèche le concentrat par pulvérisation et que l'on ajoute le cas échéant un émulsifiant tel que la lécithine pour l'instantanéiser.

L'invention concerne également un procédé de préparation d'un produit laitier fermenté précédent, caractérisé par le fait que l'on standardise en matière grasse lactique une matière première à base de lait, qu'on la pasteurise, qu'on l'ensemence avec un ou plusieurs ferment(s) lactique(s) thermophile(s) ou mésophile (s) et qu'on la fermente jusqu'à obtenir un pH inférieur à 5, qu'on incorpore dans le lait fermenté ou dans la matière première avant la pasteurisation un lipide d'origine végétale, qu'on le chauffe le cas échéant et qu'on le conditionne dans des emballages.

Une matière première liquide à base de lait mise en oeuvre peut être obtenue par standardisation, c'est à dire par recombinaison de composants d'origine laitière divers. Elle peut être composée à partir de lait entier, de lait partiellement ou totalement écrémé, de crème, de matière grasse lactique anhydre, de babeurre, de lactosérum, de lactosérum plus ou moins déminéralisé, de dérivés de lactosérum, notamment de lactose, d'hydrolysat de lactose, de concentrat de protéines de lactosérum, de fractions protéiques de lactosérum, de caséine, de fraction de caséine, d'hydrolysat de protéine lactique, de tels composants peuvent être sous forme de poudre.

Le cas échéant, il est possible d'y ajouter des additifs non laitiers, notamment des protéines et des hydrates de carbone, des vitamines, minéraux, nucléotides, nucléosides, arômes, colorants, acides aminés et stabilisants.

L'incorporation de la matière grasse d'origine végétale a lieu par émulsification, de préférence en présence de lécithine à environ 50° C sous forte agitation, par exemple dans un moulin colloïdal.

Les autres étapes du procédé sont effectuées de manière classique.

Les exemples ci-après illustrent l'invention. Dans ceux-ci, les pourcentages et parties sont pondéraux sauf indication contraire.

### Exemples 1-7

### Exemple 1.

On pasteurise séparément un lait entier contenant 3,95 % de matière grasse et 8,52 % de solides non gras et un lait maigre contenant 0,05 % de matière grasse pour 9 % de solides non gras, en les traitant à 87° C pendant 12 s.

On mélange ensuite 34,33 kg de lait entier, 0,509 kg de poudre de lait écrémé (séché à température moyenne), 162,93 kg de lait maigre, refroidi à 15° C, puis on incorpore à ce mélange un prémélange de 1,26 kg d'huile de canola, 0,9 kg d'huile de maïs, 72 g de lécithine (Topcithin 200 (R)) et 1 g de vitamine E porté à 50° C au moyen d'un moulin colloïdal. Après réchauffage à 80° C dans un échangeur à plaques, on ultrapasteurise le liquide par UHT à 141° C pendant 2s. Après refroidissement à 78° C, on l'homogénéise en deux étages, à 200 bar, puis à 50 bar, on le refroidit à 4° C et on le conditionne dans des emballages briques préalablement stérilisés, l'homogénéisation, le refroidissement et le remplissage s'effectuant aseptiquement.

### Exemple 2

On procède comme à l'exemple 1, à la différence près que l'on incorpore au mélange de lait entier, de lait maigre et de poudre de lait écrémé à titre d'huiles végétales, 1,08 kg d'huile de canola, 0,72 kg d'huile de maïs et 0,36 kg d'huile de son de riz.

### Exemple 3

On procède comme à l'exemple 1, à la différence près que l'on incorpore à un mélange de 25,1 kg de lait entier, de 171,8 kg de lait maigre et de 0,496 kg de poudre de lait écrémé, à titre d'huiles végétales, 1,44 kg d'huile de canola et 1,08 kg d'huile de maïs.

### Exemple 4

On procède comme à l'exemple 1, à la différence près que l'on incorpore à un mélange de 25,1 kg de lait entier, de 171,8 kg de lait maigre et de 0,496 kg de poudre de lait écrémé, à titre d'huiles végétales, 1,44 kg d'huile de canola, 0,72 kg d'huile de maïs et 0,36 kg d'huile de son de riz.

### Exemple 5

On pasteurise séparément un lait entier contenant 3,92 % de matière grasse et 8,58 % de solides non gras et un lait maigre contenant 0,05 % de matière grasse et 9 % de solides non gras, en les traitant à 87° C pendant 12 s.

On mélange ensuite 34,69 kg de lait entier et 160,26 kg de lait maigre, refroidi à 15° C, puis on incorpore à ce mélange un prémélange de 1,08 kg d'huile de tournesol hybride à haute teneur en acide oléique, 1,08 kg d'huile de soja et 1 g de vitamine E porté à 50° C au moyen d'un moulin colloïdal.

### Produit stérilisé:

Après réchauffage à 80° C dans un échangeur à plaques; on stérilise le liquide par UHT à 148° C pendant 5 s. Après refroidissement à 78° C, on l'homogénéise en deux étages, à 200 bar, puis à 50 bar, on le refroidit à 20° C et on le conditionne dans des emballages briques préalablement stérilisés, l'homogénéisation, le refroidissement et le remplissage s'effectuant aseptiquement.

### Produit pasteurisé

On réchauffe le liquide à 72° C pendant 15 s dasn un échangeur à plaques, on l'homogénéise en deux étages, à 200 bar, puis à 50 bar, on le refroisdit à 4° C et on le conditionne dans des emballages briques.

### Exemple 6

On procède comme à l'exemple 1, à la différence près que l'on incorpore au mélange de lait entier et de lait maigre à titre d'huiles végétales, 1,08 kg d'huile de tournesol hybride à haute teneur en acide oléique, 0,9 kg d'huile de tournesol et 0,18 kg d'huile de lin.

### Exemple 7

On procède comme à l'exemple 1, à la différence près que l'on incorpore au mélange de lait entier et de lait maigre à titre d'huiles végétales, 1,26 kg d'huile de canola, 0,72 kg d'huile de maïs et 0,18 kg d'huile de pépin de cassis.

Le tableau ci-après donne les pourcentages d'acide gras saturés (SFA), monoinsaturés (MUFA) et polyinsaturés, les rapports n-6/n-3 ainsi que les indices d'athérogénicité (IA) et de thrombogénicité (IT) des mélanges lipidiques des produits laitiers.

Les valeurs IA et AT sont calculées à partir des définitions données dans Ulbricht, T.V.L. et Southgate, D.A.T., the Lancet, 1991, 338: 985.

| **Exemple** | **SFA (%)** | **MUFA (%)** | **PUFA (%)** | **n-6/n-3** | **IA** | **IT** |
|---|---|---|---|---|---|---|
| 1 | 34,1 | 42,1 | 23,8 | 7,72 | 0,52 | 0,67 |
| 2 | 34,9 | 41,6 | 23,5 | 8,39 | 0,54 | 0,71 |
| 3 | 28,2 | 44,2 | 27,6 | 8,2 | 0,39 | 0,52 |
| 4 | 28,8 | 45,3 | 25,9 | 7,39 | 0,4 | 0,53 |
| 5 | 35 | 42,9 | 22,1 | 9,88 | 0,53 | 0,73 |
| 6 | 34,3 | 40,5 | 25,2 | 7,17 | 0,51 | 0,66 |
| 7 | 33,8 | 41,2 | 25 | 6,18 | 0,52 | 0,63 |

A titre de comparaison la graisse lactique présente des indices IA et IT élevés, respectivement 2,03 et 2,07 selon Ulbricht, T.V.L. et Southgate, D.A.T., the Lancet, 1991, **338:** 985.

### Exemple 8

On prépare des poudres de lait à 10-30 % de matière grasse en utilisant comme phase grasse un mélange de matière grasse lactique et de mélanges d'huiles végétales en proportion des exemples 1-7.

Après standardisation d'un mélange de lait entier et de lait maigre, on le préchauffe à 80° C dans un échangeur à plaques et l'on y ajoute le mélange d'huiles végétales en ligne. Après un traitement thermique de pasteurisation, on concentre par évaporation jusqu'à 50 % de matières sèches, on homogénéise le mélange, puis on le sèche par pulvérisation dans des conditions modérées.

En variante, on ajoute les huiles végétales après la concentration.

### Exemple 9

On prépare un lait fermenté à 1-4 % de matière grasse en utilisant comme phase grasse un mélange de matière grasse lactique et de mélange d'huiles végétales en proportion des exemples 1-7.

Après standardisation d'un mélange de lait entier et de lait maigre, on y incorpore un prémélange des huiles végétales des exemples 1-7. On pasteurise le tout dans un échangeur à plaques, l'on refroidit le liquide à la température de fermentation, l'on y ajoute un ferment lactique thermophile ou mésophile et l'on incube jusqu'à obtenir un pH < 5.

En variante, l'on ajoute le prémélange d'huiles végétales après la fermentation.

La suite des opérations, de remplissage et de scellage de pots et a lieu de manière traditionnelle.

### Exemples 10-11

On fabrique des laits fermentés et gélifiés gras et mi-gras du genre yaourt enrichis en bactéries probiotiques dans lesquels la matière grasse a la composition suivante:

| **Matière grasse** | **%** |
|---|---|
| Graisse de lait | 40 |
| Huile de Canola | 10 |
| Huile de soja | 16 |
| Huile de tournesol hybride riche en acide oléique | 24 |
| Huile d'olive | 10 |

On mélange 89, 3 parties de lait contenant respectivement 30 g/l (exemple 10) et 15 g/l (exemple 11) de la matière grasse précédente avec 3,7 parties de poudre de lait écrémé et l'on préchauffe le mélange à 70° C, on le pasteurise à 92° C/6 min, puis, après refroidissement à 70° C, on l'homogénéise en un seul étage à 300 bar. Après refroidissement à 43° C, on inocule le mélange avec 2 % d'un starter de yaourt courant Streptococcus thermophilus et Lactobacillus bulgaricus, auquel on ajoute 5% de Lactobacillus johnsonii (Lal, CNCM I-1227). Après conditionnement dans des pots, on effectue la fermentation à 38° C jusqu'à pH 4,6, puis on refroidit à 6° C.

### Exemples 12-13

On utilise le même mélange de matières grasses que dans les exemples 10-11 pour fabriquer des produits fermentés gras et mi-gras du genre Mozzarella.

Pour ce faire, on mélange 94,2 parties de lait écrémé avec 3 parties du mélange de matières grasses (exemple 12), respectivement 96,6 parties de lait écrémé avec 1,5 partie du mélange de matières grasses (exemple 13), que l'on préchauffe à 70° C, que l'on homogénéise à 50 bar, puis que l'on refroidit à 4° C. Le lendemain on pasteurise le mélange à 74° C/15 s, on l'ensemence avec des starters de Mozzarella classiques à base de Streptococcus thermophilus, on coagule le mélange par la présure, on découpe le caillé et on l'égoutte dans les conditions d'extrait sec et de température permettant d'atteindre le point de filature, puis on étire la masse, on la forme en morceaux , on durcit les morceaux par immersion dans l'eau froide et on les conditionne dans un liquide de composition voisine de celle du lactosérum dans des sachets souples étanches.

## Revendications

1. Produit laitier diététiquement équilibré contenant un mélange de lipides d'origine lactique et d'origine végétale, **caractérisé par le fait qu'**il contient des lipides dans lesquels les acides gras des triglycérides comprennent, en poids,
20 à 40 % d'acides gras saturés d'origine à prédominance lactique,
35 % à 60 % d'acides gras monoinsaturés et
15 à 30 % d'acides gras polyinsaturés des familles n-3 et n-6, que le rapport pondéral des acides gras de la famille n-6 sur ceux de la famille n-3 est 5:1 à 10:1, que sa partie lipidique contient en poids,
30 à 40 % de graisse lactique,
30 à 40 % d'une huile choisie parmi l'huile de colza, l'huile de canola, l'huile d'olive, les huiles hybrides de tournesol et de carthame à haute teneur en acide oléique, les oléines d'huiles végétales,
10 à 30 % d'une huile choisie parmi l'huile de tournesol, de maïs, de soja, de pépins de raisins, de carthame
0 à 10 % d'une huile choisie parmi l'huile de son de riz, l'huile de lin, l'huile de germes de blé ou l'huile de sésame.

2. Produit laitier selon la revendication 1, **caractérisé par le fait qu'**il contient l'alpha-tocophérol comme antioxydant.

3. Produit laitier selon la revendication 1, **caractérisé par le fait qu'**il est enrichi en calcium.

4. Produit laitier selon la revendication 1, **caractérisé par le fait qu'**il est enrichi en vitamines E, A, D, C, B₆, B₁₂, folate et en oligo-éléments, notamment en fer, magnésium et zinc.

5. Produit laitier selon la revendication 1, **caractérisé par le fait qu'**il est aromatisé.

6. Produit laitier selon l'une des revendications 1 à 5, **caractérisé par le fait qu'**il se présente sous forme de lait ou de substitut de lait liquide contenant 1 à 4 % de matière grasse et notamment environ 2 % de matière grasse.

7. Produit laitier selon la revendication 6, **caractérisé par le fait qu'**il est pasteurisé, ultra-pasteurisé ou stérilisé, et conditionné aseptiquement ou de manière hautement hygiénique.

8. Produit laitier selon l'une des revendications 1 à 5, **caractérisé par le fait qu'**il est sous forme de poudre.

9. Produit laitier selon l'une des revendications 1 à 5, **caractérisé par le fait qu'**il est un lait fermenté ou un produit fromager.

10. Procédé de préparation d'un produit laitier liquide selon la revendication 6, **caractérisé par le fait que** l'on standardise une matière première à base de lait en matière grasse lactique, que l'on y incorpore un lipide d'origine végétale le cas échéant en présence d'émulsifiant de manière à obtenir une émulsion, que l'on préchauffe, traite thermiquement par UHT, homogénéise, refroidit et conditionne aseptiquement l'émulsion.

11. Procédé de préparation d'un produit laitier sous forme de poudre selon la revendication 8, **caractérisé par le fait que** l'on standardise en matière grasse lactique une matière première à base de lait, que l'on y incorpore un lipide d'origine végétale de manière à obtenir une émulsion, que l'on préchauffe, puis concentre l'émulsion par évaporation et qu'on homogénéise, puis sèche le concentrat par pulvérisation et le cas échéant ajoute de la lécithine pour instantanéiser.

12. Procédé de préparation d'un produit laitier fermenté selon la revendication 9, **caractérisé par le fait que** l'on standardise en matière grasse lactique une matière première à base de lait, qu'on la pasteurise, qu'on l'ensemence avec un ou plusieurs ferment(s) lactique(s) thermophile(s) ou mésophile(s) et qu'on la fermente jusqu'à obtenir un pH inférieur à 5, qu'on incorpore dans le lait fermenté ou dans la matière première avant la pasteurisation un lipide d'origine végétale, qu'on le chauffe le cas échéant et qu'on le conditionne dans des emballages.

13. Utilisation d'un produit laitier selon l'une des revendications 1 à 8 comme matière première dans la fabrication d'un aliment à base de lait, notamment une crème, une crème glacée, un dessert, une sauce, un produit du genre yaourt ou un produit du genre fromage, notamment du genre Mozzarella.

## Patentansprüche

1. Diätetisch ausgeglichenes Milchprodukt, das eine Mischung aus von Milch stammenden Lipiden und Lipiden pflanzlichen Ursprungs enthält, **dadurch gekennzeichnet, daß** es Lipide enthält, bei denen die Fettsäuren der Triglyceride, in Gewicht, 20 bis 40% gesättigte Fettsäuren, die überwiegend aus der Milch stammen,
35 bis 60% einfach ungesättigte Fettsäuren und
15 bis 30% mehrfach ungesättigte Fettsäuren der Familien n-3 und n-6 umfassen,
daß das Gewichtsverhältnis der Fettsäuren der Familie n-6 zu denen der Familie n-3 5:1 bis 10:1 beträgt,
daß sein Lipidteil, in Gewicht, folgendes enthält:
30 bis 40% Milchfett,
30 bis 40% eines Öls, das aus Rapsöl, Canolaöl, Olivenöl, Öl von Sonnenblumen- oder Saflorhybriden mit einem hohen Gehalt an Ölsäure, Oleinen von Pflanzenölen ausgewählt ist,
10 bis 30% eines Öls, das aus Sonnenblumenöl, Maisöl, Sojaöl, Traubenkernöl, Safloröl ausgewählt ist,
0 bis 10% eines Öls, das aus Reiskleieöl, Leinöl, Weizenkeimöl oder Sesamöl ausgewählt ist.

2. Milchprodukt nach Anspruch 1, **dadurch gekennzeichnet, daß** es alpha-Tocopherol als Antioxidans enthält.

3. Milchprodukt nach Anspruch 1, **dadurch gekennzeichnet, daß** es mit Calcium angereichert ist.

4. Milchprodukt nach Anspruch 1, **dadurch gekennzeichnet, daß** es mit Vitaminen E, A, D, C, B₆, B₁₂, Folat und Spurenelementen, insbesondere Eisen, Magnesium und Zink, angereichert ist.

5. Milchprodukt nach Anspruch 1, **dadurch gekennzeichnet, daß** es aromatisiert ist.

6. Milchprodukt nach einem der Ansprüche 1 bis 5, **dadurch gekennzeichnet, daß** es in Form von Milch oder flüssigem Milchsubstitut mit 1 bis 4% Fett und insbesondere etwa 2% Fett vorliegt.

7. Milchprodukt nach Anspruch 6, **dadurch gekennzeichnet, daß** es pasteurisiert, ultrapasteurisiert oder keimfrei gemacht ist und keimfrei oder hoch hygienisch verpackt ist.

8. Milchprodukt nach einem der Ansprüche 1 bis 5, **dadurch gekennzeichnet, daß** es in Pulverform vorliegt.

9. Milchprodukt nach einem der Ansprüche 1 bis 5, **dadurch gekennzeichnet, daß** es eine fermentierte Milch oder ein Käseprodukt ist.

10. Verfahren zur Herstellung eines flüssigen Milchprodukts nach Anspruch 6, **dadurch gekennzeichnet, daß** man ein Ausgangsmaterial auf Milchbasis hinsichtlich Milchfett standardisiert, daß man ihm ein Lipid pflanzlichen Ursprungs ggf. in Gegenwart eines Emulgators so einarbeitet, daß man eine Emulsion erhält, und daß man die Emulsion vorerhitzt, thermisch mit UHT behandelt, kühlt und keimfrei verpackt.

11. Verfahren zur Herstellung eines Milchprodukts in Pulverform nach Anspruch 8, **dadurch gekennzeichnet, daß** man ein Ausgangsmaterial auf Milchbasis hinsichtlich Milchfett standardisiert, daß man ihm ein Lipid pflanzlichen Ursprungs so einarbeitet, daß man eine. Emulsion erhält, daß man die Emulsion vorerhitzt und dann durch Eindampfen konzentriert und daß man das Konzentrat homogenisiert und dann durch Sprühtrocknung trocknet und ggf. Lecithin zusetzt, um es sofortlöslich zu machen.

12. Verfahren zur Herstellung eines fermentierten Milchprodukts nach Anspruch 9, **dadurch gekennzeichnet, daß** man ein Ausgangsmaterial auf Milchbasis hinsichtlich Milchfett standardisiert, daß man es pasteurisiert, daß man es mit einem oder mehreren thermophilen oder mesophilen Milchfermenten beimpft und daß man es fermentiert, bis man einen pH-Wert unter 5 erhält, daß man in die fermentierte Milch oder in das Ausgangsmaterial vor der Pasteurisierung ein Lipid pflanzlichen Ursprungs einarbeitet, daß man es ggf. erhitzt und daß man es in Verpackungen konditioniert.

13. Verwendung eines Milchprodukts nach einem der Ansprüche 1 bis 8 als Ausgangsmaterial bei der Herstellung eines Nahrungsmittels auf Milchbasis, insbesondere eine Creme, ein Speiseeis, ein Dessert, eine Sauce, ein Produkt vom Typ Jogurt oder ein Produkt vom Typ Käse, insbesondere Mozarella.

## Claims

1. Dietetically balanced milk product containing a mixture of lipids of lactic origin and vegetable origin, **characterized in that** it contains lipids in which the fatty acids of the triglycerides comprise, by weight, 20 to 40 % of saturated fatty acids of predominantly lactic origin,
35 to 60 % of monounsaturated fatty acids and
15 to 30 % of polyunsaturated fatty acids of the n-3 and n-6 families,
**in that** the weight ratio of fatty acids of the n-6 family to those of the n-3 family is 5:1 to 10:1,
**in that** its lipid part contains by weight,
30 to 40 % of milk fats,
30 to 40 % of an oil selected from rapeseed oil, canola oil, olive oil, hybrid sunflower and safflower oils with a high oleic acid content and vegetable oil oleins,
10 to 30 % of an oil selected from sunflower oil, corn oil, soya oil, grapeseed oil and safflower oil,
0 to 10 % of an oil selected from rice bran oil, linseed oil, wheatgerm oil or sesame oil.

2. Milk product according to claim 1, **characterized in that** it contains alpha-tocopherol as an antioxidant.

3. Milk product according to claim 1, **characterized in that** it is enriched in calcium.

4. Milk product according to claim 1, **characterized in that** it is enriched in vitamins E, A, D, C, B₆, B₁₂, folate and trace elements, in particular iron, magnesium and zinc.

5. Milk product according to claim 1, **characterized in that** it is flavoured.

6. Milk product according to one of claims 1 to 5, **characterized in that** it is in the form of a milk or liquid milk substitute containing 1 to 4 % of fats and in particular approximately 2 % of fats.

7. Milk product according to claim 6, **characterized in that** it is pasteurized, ultra-pasteurized or sterilized, and packaged aseptically or in a highly hygienic manner.

8. Milk product according to one of claims 1 to 5, **characterized in that** it is in powder form.

9. Milk product according to one of claims 1 to 5, **characterized in that** it is a fermented milk or a cheese product.

10. Process for preparing a liquid milk product according to claim 6, **characterized in that** a milk-based raw material is standardized for milk fats, that a lipid of vegetable origin is incorporated therein, optionally in the presence of an emulsifier so as to obtain an emulsion, and that the emulsion is preheated, heat-treated by UHT, homogenized, cooled and packaged aseptically.

11. Process for preparing a milk product in powder form according to claim 8, **characterized in that** a milk-based raw material is standardized for milk fats, that a lipid of vegetable origin is incorporated therein so as to obtain an emulsion, that it is preheated and the emulsion then is concentrated by evaporation and that the concentrate is homogenized and then spray-dried and that lecithin is optionally added to give an instant product.

12. Process for preparing a milk product according to claim 9, **characterized in that** a milk-based raw material is standardized for milk fats, that it is pasteurized, that it is seeded with one or more thermophilic or mesophilic lactic ferments and that it is fermented until a pH of less than 5 is obtained, that a lipid of vegetable origin is incorporated in the fermented milk or in the raw material before pasteurization, that it is optionally heated and that it is packaged in packages.

13. Use of a milk product according to one of claims 1 to 8 as a raw material in the production of a milk-based food, in particular a cream, an ice cream, a dessert, a sauce, a product of the yoghurt type or a product of the cheese type, in particular of the Mozzarella type.
